# EUROPEAN PATENT SPECIFICATION

(11) **EP 3 033 942 B1**
(45) Date of publication and mention of the grant of the patent: **29.03.2017**
(21) Application number: 15198102.4
(22) Date of filing: 04.12.2015
(51) Int. Cl.: A01M 7/00, B05B 11/00

(54) **DISPLACEMENT PUMP TO BE USED ON KNAPSACK**
VERDRÄNGERPUMPE FÜR RÜCKENPUMPE
POMPE VOLUMETRIQUE DESTINEE A ETRE PORTEE A DOS

(30) Priority: 19.12.2014 IT VI20140322
(43) Date of publication of application: 22.06.2016
(73) Proprietor: EPOCA S.p.A., 36061 Vicenza (IT)
(72) Inventor: Boriani, Edda, 36028 Vicenza (IT)
(74) Representative: Bettello, Pietro

(56) References cited:
- EP-A1- 0 410 940
- DE-U1-202009 006 000

## Description

The present finding concerns a displacement pump to be used on knapsack, according to the general part of claim 1.

As is well known, in knapsacks used in agriculture and gardening for spraying, weeding gardens, vegetable gardens and small crops, the operating member consists of an equipment, known by the generic term of "displacement pump", which sucks the liquid contained in the tank and ejects it through a nozzle, atomised under pressure.

The displacement pump falls into the category of "volumetric" pumps consisting of a cylinder, into which a piston slides: two one-way valves (check valves) allow the inflow of the liquid alternatively from the tank to a lower chamber (suction/compression chamber) and inject it into an upper chamber (accumulation chamber) connected to the external duct.

The most important prior art documents are: DE 202009006000 U1 and EP 0410940 A1.

In the normal use of knapsack pumps, the manual operation of the pumping hand lever is difficult when the air pressure into the accumulation chamber is close to the maximum value.

In practice, when the air pressure in the accumulation chamber, as a result of the reduction of its volume consequent to the filling with the liquid, has reached a high value, pressure peaks are generated which cause two drawbacks:
the first drawback occurs when the value of the pressure peaks exceed the maximum fixed level of pressure, with the consequence of damage to the seals and automatic opening of the safety valves, which entails having to stop using the tool, with the operator's intervention for reset maintenance or for replacement with new safety valves;
the second drawback occurs when the pressure peaks interfere with the manual operation of the pumping hand lever, generating "kickbacks", which can damage the operator's limb which is normally already under stress.

The object of the present invention is to provide a displacement pump for knapsack which is free from the drawbacks of similar products of a known type.

Specifically, the object of the invention is to provide a displacement pump that allows the operator to operate the pumping hand lever to obtain the atomised liquid flow always at the maximum pressure (in the order of 6 bar), exerting a regular effort, without kickbacks and of minimum value.

Such an object is achieved by making at least one passage on the bottom of the suction/compression chamber which connects the suction/compression chamber with the container.

Specifically, such a passage consists of at least one calibrated hole, which is always open, so as to be alternatively crossed by the liquid in both directions: incoming liquid during the suction step in conjunction with the check valve open and outgoing liquid during the compression step, as opposed to the check valve, which remains closed.

Laboratory and practical tests have shown that the presence of the passage made on the bottom of the suction/compression chamber involves, in practice, advantages such as:
- increased suction rate for each cycle of the pumping hand lever, accelerating the suction step;
- pressure control and regularization, since any pressure peaks during the compression step are neutralised with the free draining of liquid from the calibrated holes.

Other features of the invention are apparent from the description of a possible embodiment thereof, made only by way of non-limiting example with the aid of the accompanying drawing tables, in which:
- fig. 1 (tab. I) shows a view of a knapsack provided with the displacement pump of the invention;
- fig. 2 shows an elevation and sectional view of the lower end of the displacement pump;
- figs. 3-4 show detailed sectional and plan views, respectively, of the calibrated hole;
- figs. 5-6 (tab. II) show the end of the displacement pump in operating conditions, in the liquid suction and compression steps, respectively.

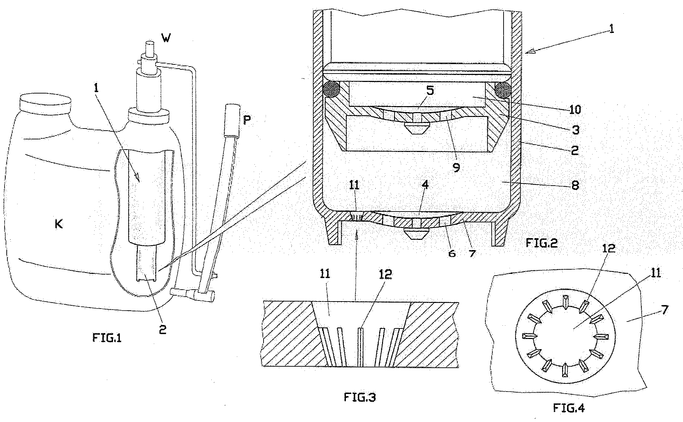

As shown in figs. 1 and 2, the displacement pump, indicated as a whole with reference numeral 1, operated by means of a hand lever "P" which sucks the liquid contained in tank "K" and ejects it atomised under pressure, substantially consists of a cylinder 2, inside which a piston 3 slides; moreover, two one-way check valves 4 and 5 are provided which alternatively allow the inflow of liquid from the tank, through holes 6 present on base 7, to a lower chamber or suction/compression chamber, indicated with reference numeral 8 and inject it, through holes 9 made on piston 3, into an upper chamber or accumulation chamber, indicated with reference numeral 10 and connected to the external duct "W", all as per se known.

As shown in figs. 2-4, on base 7 there is at least one calibrated hole 11 with a tapered section converging towards the tank and provided with circumferential projections 12 arranged in the narrowest portion.

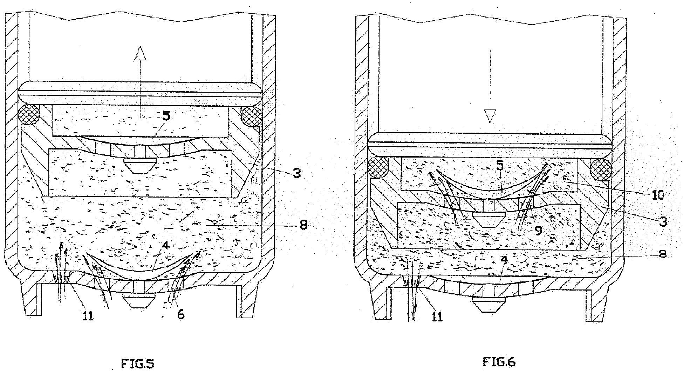

Operationally, as shown in fig. 5, in the suction step of the product from tank "K", the lifting of piston 3 with its check valve 5 closed, results in the opening of check valve 4, which opens the through holes 7, through which and in addition to the calibrated hole 11, the product contained in the tank is sucked and fills the volume in gradual increase of the suction chamber 8.

Advantageously, in this step, the presence of the calibrated hole 11 increases the suction flow rate of the product and the presence of notches 12 retains any impurities contained in the product itself.

In contrast, as shown in fig. 6, in the compression step, the forced lowering of piston 3 closes the check valve 4 of base 7 and opens the check valve 5, so the product passes from the suction chamber 8 to the accumulation chamber 10 and, simultaneously, a minimal rate of product is also discharged through the calibrated hole 11 in which, due to the tapering, a "Venturi" effect is generated, whereby a forced outgoing flow is generated which sucks the harmful residues, such as sediments that form on the bottom of the suction chamber 8 and, in particular, the sludge present under the check valve 4.

The structure thus conceived can be subjected to several variations, and its size and its particular shapes may vary depending on the project and technical requirements, provided that everything falls within the scope of the inventive concept defined by the following claims.

## Claims

1. DISPLACEMENT PUMP TO BE USED ON KNAPSACK, used in agriculture and gardening for spraying, weeding gardens, vegetable gardens and small crops, operated via a hand lever (P) and which sucks the liquid contained in a tank (K) and ejects it atomised under pressure, of the type which includes a cylinder (2), within which a piston (3) is slidable, two one-way check valves (4, 5) that allow, alternatively, the inflow of liquid from the tank (K), through two holes (6) present on the base (7), to a lower chamber or suction/compression chamber (8) and feed it, through holes (9) made on the piston (3), into an upper chamber or accumulation chamber (10) connected to an external duct (W), said displacement pump (1) being **characterised in that** on the base (7) there is at least one calibrated hole (11), which connects the inside of the tank (K) to the suction chamber (8).

2. DISPLACEMENT PUMP (1), according to claim 1, **characterised in that** the calibrated hole (11) has a tapered section converging in the direction of the tank.

3. DISPLACEMENT PUMP (1), according to claim 2, **characterised in that** in the narrower portion of the hole (11) there are circumferential projections (12).

4. DISPLACEMENT PUMP (1), according to one or more of the preceding claims, **characterised in that** the through-surface of the single hole or the plurality of holes (11) is dimensioned to prevent the occurrence of "pressure peaks".

5. KNAPSACK PUMP, used for spraying and/or atomising liquid substances, **characterised in that** it uses a displacement pump (1), according to one or more of the preceding claims.

6. PUMP, used for spraying and/or atomising liquid substances, **characterised in that** it uses a displacement pump (1), according to one or more of claims from 1 to 4.

## Patentansprüche

1. VERDRÄNGERPUMPE FÜR RÜCKENPUMPE, die in der Landwirtschaft und im Gartenbau zum Sprengen, Unkrautbekämpfen in Gärten, Gemüsegärten und kleinen Kulturen verwendet und mit einem Handhebel (P) betätigt wird und die in einem Behälter (K) enthaltene Flüssigkeit ansaugt und unter Druck zerstäubend ausstößt, des Typs, der einen Zylinder (2) aufweist, in dem ein Kolben (3) verschiebbar ist, zwei Einweg-Rückschlagventile (4, 5), die abwechslungsweise das Einlaufen der Flüssigkeit aus dem Behälter (K) durch zwei in der Basis (7) befindliche Löcher (6) in eine untere Kammer oder Ansaug-Kompressionskammer (8) erlauben, und diese durch Löcher (9) auf dem Kolben (3) in eine obere Kammer oder Sammelkammer (10) speisen, die an eine externe Leitung (W) angeschlossen ist, wobei die Verdrängerpumpe (1) **dadurch gekennzeichnet ist, dass** in der Basis (7) wenigstens ein kalibriertes Loch (11) vorhanden ist, welches den Innenraum des Behälters (K) mit der Ansaugkammer (8) verbindet.

2. VERDRÄNGERPUMPE (1) nach Anspruch 1, **dadurch gekennzeichnet, dass** das kalibrierte Loch (11) einen sich verjüngenden, in Richtung Behälter konvergierenden Abschnitt aufweist.

3. VERDRÄNGERPUMPE (1) nach Anspruch 2, **dadurch gekennzeichnet, dass** in dem schmaleren Abschnitt des Loches (11) umlaufende Auskragungen (12) vorhanden sind.

4. VERDRÄNGERPUMPE (1) nach einem oder mehreren der vorstehenden Ansprüche, **dadurch gekennzeichnet, dass** die Durchfläche des einzelnen Loches oder der mehreren Löcher (11) entsprechend bemessen ist, um das Auftreten von "Druckspitzen" zu verhindern.

5. RÜCKENPUMPE, die zum Sprengen und/oder zum Zerstäuben von flüssigen Stoffen verwendet wird, **dadurch gekennzeichnet, dass** in ihr eine Verdrängerpumpe (1) nach einem oder mehreren der vorstehenden Ansprüche eingesetzt wird.

6. PUMPE, die zum Sprengen und/oder zum Zerstäuben von flüssigen Stoffen verwendet wird, **dadurch gekennzeichnet, dass** in ihr eine Verdrängerpumpe (1) nach einem oder mehreren der vorstehenden Ansprüche 1 bis 4 eingesetzt wird.

## Revendications

1. POMPE VOLUMETRIQUE DESTINEE A ETRE UTILISEE SUR UNE POMPE A DOS, utilisée en agriculture et en jardinage pour la pulvérisation, le désherbage de jardins, potagers et petites cultures, actionnée par l'intermédiaire d'un levier (P) et qui aspire le liquide contenu dans un réservoir (K) et l'éjecte atomisé sous pression, du type qui comprend un cylindre (2), dans lequel un piston (3) est coulissant, deux clapets de non retour (4, 5) qui permettent, alternativement, l'afflux de liquide à partir du réservoir (K), à travers deux trous (6) présents sur la base (7), vers une chambre inférieure ou chambre d'aspiration/compression (8) et l'achemine, à travers des trous (9) réalisés sur le piston (3), dans une chambre supérieure ou chambre d'accumulation (10) connectée à un conduit externe (W), ladite pompe volumétrique (1) étant **caractérisée en ce que**, sur la base (7) est présent au moins un orifice calibré (11), qui relie l'intérieur du réservoir (K) à la chambre d'aspiration (8).

2. POMPE VOLUMETRIQUE (1), selon la revendication 1, **caractérisée en ce que** l'orifice calibré (11) a une section conique convergeant dans la direction du réservoir.

3. POMPE VOLUMETRIQUE (1), selon la revendication 2, **caractérisée en ce que**, dans la portion plus étroite de l'orifice (11) sont présentes des saillies circonférentielles (12).

4. POMPE VOLUMETRIQUE (1), selon une ou plusieurs des revendications précédentes, **caractérisée en ce que** la surface passante de l'orifice individuel ou de la pluralité d'orifices (11) est dimensionnée pour éviter la survenance de «pics de pression ».

5. POMPE A DOS, utilisée pour pulvériser et/ou atomiser des substances liquides, **caractérisée en ce qu'**elle utilise une pompe volumétrique (1), selon une ou plusieurs des revendications précédentes.

6. POMPE, utilisée pour pulvériser et/ou atomiser des substances liquides, **caractérisée en ce qu'**elle utilise une pompe volumétrique (1), selon une ou plusieurs des revendications 1 à 4.
